# FASCICULE DE BREVET EUROPEEN

(11) **EP 2 081 781 B1**
(45) Date de publication et mention de la délivrance du brevet: **18.09.2019**
(21) Numéro de dépôt: 07821086.1
(22) Date de dépôt: 09.10.2007
(51) Int. Cl.: B60C 23/20

(54) **PROCEDE D'INDICATION DU VIEILLISSEMENT SUBI PAR UN PNEUMATIQUE**
VERFAHREN ZUM ANZEIGEN DES VON EINEM REIFEN ERFAHRENEN ALTERUNGSGRADS
METHOD OF INDICATING THE DEGREE OF AGEING EXPERIENCED BY A TYRE

(30) Priorité: 20.10.2006 FR 0609344
(43) Date de publication de la demande: 29.07.2009
(73) Titulaire: Compagnie Générale des Etablissements Michelin, 63000 Clermont-Ferrand (FR)
(72) Inventeur: COUE, Jean, 63540 Romagnat (FR)
(74) Mandataire: Le Cam, Stéphane Georges Elie
(86) Numéro de dépôt international: PCT/EP2007/060717
(87) Numéro de publication internationale: WO 2008/046766

(56) Documents cités:
- EP-A- 0 937 615
- EP-A- 1 544 002
- WO-A-95/22467
- WO-A1-2006/058916
- DE-A1- 19 611 364
- US-A1- 2003 021 330
- US-A1- 2005 045 257

## Description

L'invention est relative à un procédé d'indication du vieillissement subi par un pneumatique en roulage sur un véhicule. L'invention concerne encore l'utilisation d'au moins une mesure de température locale en un point d'un pneumatique et de la mesure du temps d'exposition à ladite température pour déterminer une indication du vieillissement subi par ledit pneumatique en roulage sur un véhicule.

Bien que non limitée à ce type d'application, l'invention sera plus particulièrement décrite en référence à des pneumatiques équipant des véhicules de type poids lourds tels que camions, bus, tracteurs, remorques... etc. Le coût des pneumatiques pour des véhicules tels que les camions conduit à une part non négligeable dans le coût du transport de marchandises. Il est donc toujours souhaitable d'optimiser le rendement des pneumatiques.

Une première voie peut être d'optimiser l'usage qui est fait de ces pneumatiques notamment en vue d'améliorer leur durée de vie. Une autre voie, complémentaire de la précédente est d'assurer au moins la possibilité d'un rechapage lorsque la bande de roulement est usée.

Un tel pneumatique est habituellement constitué d'une armature de carcasse, ancrée de part et d'autre dans la zone des bourrelets, surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première couche de sommet dite de travail, formées de fils ou câbles parallèles présentant des angles au plus égaux à 45° en valeur absolue.

Les couches de travail sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection formée d'éléments de renforcement avantageusement métalliques et extensibles, dits élastiques.

Certains pneumatiques actuels, dits « routiers » sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Lorsque par exemple il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'améliorer l'endurance de l'armature de sommet du type de pneumatique étudié, des solutions relatives à la structure et à la qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Il s'avère toutefois qu'en fonction des conditions d'utilisation des pneumatiques, quels que soient les moyens mis en oeuvre, les roulages sur longues distances peuvent se traduire par un vieillissement avancé du pneumatique.

Les documents DE19611364 et US2003/0021330 A1 décrivent notamment des procédés consistant à effectuer des mesures sur les pneumatiques notamment de température.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Il est par ailleurs connu d'utiliser des modules électroniques dans les pneumatiques pour différents types d'applications consistant à acquérir, stocker et/ou transmettre des informations sur le pneumatique.

De tels modules électroniques peuvent comprendre des composants passifs tels des puces d'identification ou RFID, et/ou des composants actifs reliés à un système autonome d'alimentation en énergie électrique tel que des batteries ou encore un système à couplage inductif. Ces modules électroniques peuvent être conçus pour échanger des informations avec des modules externes, servant par exemple d'interface avec l'usager, par l'intermédiaire d'ondes radio dont la fréquence et la puissance sont soigneusement ajustées et selon des protocoles de transmission spécifiques. Ils peuvent encore être prévus pour stocker des informations pour être interrogés ultérieurement.

Il est connu, notamment du document WO 2006/058916, d'utiliser un capteur inséré dans un pneumatique pour mesurer la température localement dans un pneumatique

Il est connu, notamment du document EP 1 275 949, d'implanter un capteur sans fil dans les pneumatiques pour déterminer des forces ou contraintes s'exerçant au sein du pneumatique.

Le document EP 0 937 615 décrit quant à lui l'utilisation de capteurs sans fil à onde acoustique de surface intégrés dans un pneumatique notamment pour la mesure de l'adhérence d'un pneumatique. Un tel capteur présente l'avantage de pouvoir être interrogé à distance, par onde radiofréquence, sans-fil, sans qu'une source d'énergie proche soit nécessaire. L'énergie de l'onde radio d'interrogation envoyée par un dispositif d'interrogation à distance est suffisante pour que le capteur envoie une onde radio modifiée en réponse.

Des modules électroniques tels que les capteurs sans fil à onde acoustique de surface de type SAW (Surface Acoustic Wave) ou bien à onde acoustique de volume de type BAW (Bulk Acoustic Wave) peuvent ainsi être utilisés dans des pneumatiques pour effectuer des mesures de paramètres physiques. Un avantage important est qu'ils peuvent être interrogés à distance par onde radio, sans qu'une source d'énergie proche leur soit nécessaire.

Des modules électroniques peuvent donc être fixés à l'intérieur de la cavité formée par le pneumatique une fois monté sur la roue ou bien alors implantés au sein de la masse caoutchouteuse du pneumatique.

Les inventeurs se sont ainsi donnés pour mission d'être en mesure d'estimer le vieillissement subi par un pneumatique par exemple en vu de décider de son éventuel rechapage.

Ce but a été atteint selon l'invention par un procédé d'indication du vieillissement subi par un pneumatique en roulage sur un véhicule, selon lequel on mesure la température localement au moins en un point du pneumatique, on mesure le temps d'exposition à ladite température, ces mesures étant analysées avec un modèle dudit pneumatique.

Au sens de l'invention, l'analyse avec un modèle du pneumatique est par exemple une application des mesures audit modèle pour en déterminer les conséquences.

Selon un mode de réalisation préférée de l'invention, le modèle dudit pneumatique est un système d'abaques et/ou un modèle numérique.

Par modèle du pneumatique, il faut comprendre au sens de l'invention, une représentation du vieillissement du pneumatique en fonction des paramètres température en un point du pneumatique et temps d'exposition à ladite température. Ce type de modèle, à la portée de l'homme du métier, peut être obtenue de manière empirique et/ou par simulation numérique.

Les inventeurs ont su mettre en évidence qu'indépendamment de la distance parcourue par le pneumatique, la température dudit pneumatique en un point du pneumatique et les temps d'expositions à ces températures lors de roulage sont les facteurs déterminants du vieillissement subi par le pneumatique. L'utilisation de modèles propres audit pneumatique va ainsi permettre à partir de chaque mesure d'estimer la part de vieillissement apportée lors du roulage effectué ayant conduit à ces conditions de température.

L'invention nécessite donc une étape préalable qui consiste à créer ce modèle du pneumatique, a priori pour un pneumatique donné pour une dimension donnée, voire pour un ensemble de pneumatiques présentant des dimensions et caractéristiques techniques proches.

Les résultats obtenus ne sont bien entendu que des estimations de vieillissement car s'il est possible d'associer une valeur représentative d'un vieillissement subi par un pneumatique pour une utilisation donnée, il n'est pas possible dans l'état actuel des connaissance de rapporter cette valeur à une durée de vie du pneumatique qui reste inconnue ; outre la conception même du pneumatique, celle-ci est fonction de nombreux paramètres tels que les conditions d'utilisation du pneumatique.

Une variante avantageuse de l'invention prévoit que la température est mesurée aux extrémités des nappes de travail du pneumatique. Comme énoncé précédemment, la température de la masse caoutchouteuse dans ces zones du pneumatique est particulièrement pertinente quant au vieillissement du pneumatique.

Les mesures de température du pneumatique sont alors avantageusement effectuées directement dans ces zones par l'utilisation de modules électroniques tels que ceux évoqués précédemment.

Selon un premier mode de réalisation de l'invention, les mesures sont enregistrées et l'analyse est effectuée sur le cumul des mesures. Selon ce mode de réalisation de l'invention, le module électronique inséré dans le pneumatique va permettre de faire un enregistrement des mesures de température et des temps d'exposition à ces températures tout au long des roulages effectués par le pneumatique monté sur un véhicule.

Ces enregistrements pourront permettre à un instant donné d'effectuer une analyse avec un modèle dudit pneumatique et d'estimer le vieillissement apporté par les roulages effectués. Par exemple, après usure de la bande de roulement, le technicien du rechapage va prendre une décision quant à l'éventuel rechapage du pneumatique. Cette décision sera prise en considérant un seuil de vieillissement subi qui ne doit pas être dépassé. Ce seuil à ne pas dépasser est défini empiriquement par le technicien pour un pneumatique donné par exemple à partir d'autres moyens d'examen de pneumatiques, notamment destructifs.

Selon un autre mode de réalisation de l'invention, les mesures sont analysées instantanément et une information est transmise au conducteur du véhicule. Selon ce deuxième mode de réalisation de l'invention, l'analyse des mesures est effectuée en continu et des informations sont transmises au conducteur. Ces informations peuvent notamment être transcrites sous forme d'indications ou de conseils en vu de modifier la conduite pour faire supporter un moindre vieillissement aux pneumatiques du véhicule.

Le conducteur du véhicule peut ainsi adapter sa conduite aux conditions et minimiser le vieillissement subi par les pneumatiques.

L'invention prévoit également une combinaison de ces deux modes de réalisation, une information en continu pouvant être communiquée au conducteur tout en étant stockée dans une mémoire tampon qui peut être interrogée ultérieurement notamment lorsqu'une décision sur un éventuel rechapage doit être prise.

Une réalisation avantageuse de l'invention prévoit qu'au moins un capteur de température, associé à des moyens d'enregistrement et/ou de communication est inséré dans le pneumatique et de préférence à proximité des extrémités axiales des nappes de travail du pneumatique. Une telle réalisation peut être faite conformément aux techniques évoquées précédemment et permet d'accéder à des mesures précises des températures et des temps d'exposition, aucun phénomène de retard ou de dissipation n'étant à prendre ne compte comme dans le cas d'une valeur obtenue par extrapolation d'une mesure faite à distance.

L'invention prévoit toutefois dans une variante de réalisation de réaliser des mesurées à laide d'un capteur placé à distance et pouvant par exemple être dans la cavité du pneumatique. De telles mesures sont alors moins précises et sujettes à des phénomènes de retard mais sont intéressantes d'un point de vue économique car moins onéreuses notamment en termes de fabrication, et notamment pour effectuer une analyse sur un cumul de mesures.

L'invention propose également une utilisation d'au moins une mesure de température locale en un point d'un pneumatique et de la mesure du temps d'exposition à ladite température pour déterminer une indication du vieillissement subi par ledit pneumatique en roulage sur un véhicule par l'analyse de ces mesures avec un modèle du pneumatique.

Selon un premier mode de réalisation de l'invention, cette utilisation d'au moins une mesure de température locale en un point d'un pneumatique et de la mesure du temps d'exposition à ladite température permet de déterminer l'aptitude d'un pneumatique au rechapage.

Selon un deuxième mode de réalisation de l'invention, cette utilisation d'au moins une mesure de température locale en un point d'un pneumatique et de la mesure du temps d'exposition à ladite température permet d'apporter une information au conducteur du véhicule sur la conduite à adopter

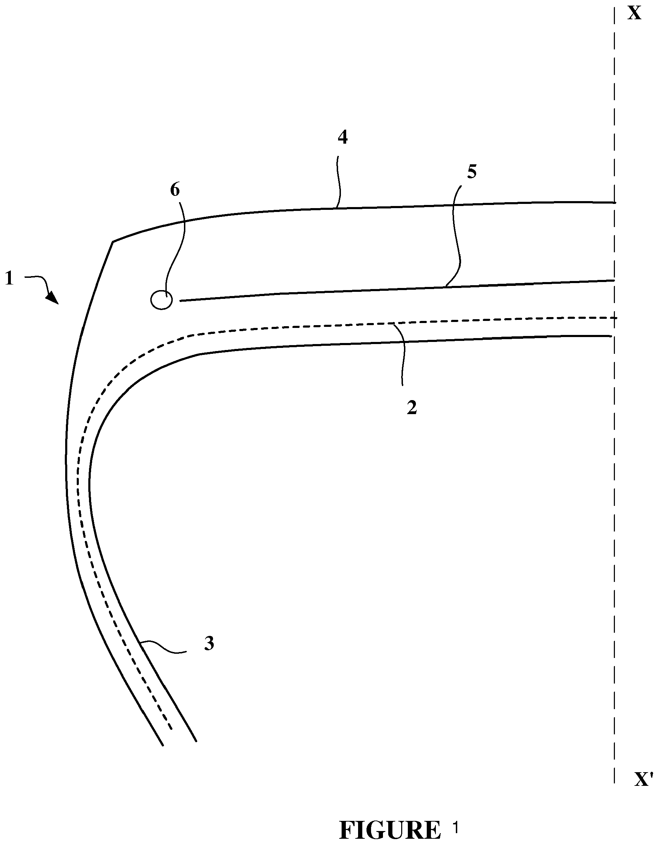

D'autres détails et caractéristiques avantageux de l'invention ressortiront ci-après de la description d'exemples de réalisation de l'invention en référence à la figure 1 qui représente une vue méridienne d'un schéma d'un pneumatique.

La figure n'est pas représentée à l'échelle pour en simplifier la compréhension.

La Figure 1 ne représente qu'une vue partielle d'un demi pneumatique 1 qui se prolonge de manière symétrique par rapport à l'axe XX' qui représente le plan médian circonférentiel, ou plan équatorial, du pneumatique. Les zones basses et bourrelets du pneumatique 1 ne sont notamment pas représentés sur cette figure.

La figure 1 représente un pneumatique 1 destiné à être utilisé sur un véhicule de type poids-lourds comprenant une armature de carcasse constituée d'une seule couche 2 comprenant des éléments de renforcement métalliques orientés radialement.

Ladite couche de carcasse 2 est ancrée de chaque côté du pneumatique 1 dans un bourrelet dont la base est destinée à être montée sur un siège de jante. Chaque bourrelet est prolongé radialement vers l'extérieur par un flanc 3, ledit flanc 3 rejoignant radialement vers l'extérieur la bande de roulement 4.

Le pneumatique 1 comporte encore une armature de sommet 5, dont le détail n'est pas représenté sur la figure. L'armature de sommet peut comporter deux couches d'éléments de renforcement parallèles entre eux et faisant avec la direction circonférentielle des angles aigus, lesdits éléments de renforcement étant croisés d'une couche à la suivante.

Conformément à l'invention, le pneumatique comporte un système 6 de mesure de la température. Ce système de mesure 6 est un capteur de température sans fil, de type résonateur SAW (Surface Acoustic Wave). Ce type de capteur présente l'avantage, comme expliqué précédemment, de ne pas nécessiter d'alimentation associée ; il renseigne sur la température de la masse caoutchouteuse qui l'entoure en modifiant une onde qu'il reçoit et retransmet.

Le pneumatique peut comporter un deuxième capteur identique au précédent disposé de manière symétrique par rapport à l'axe XX'.

Un dispositif interrogateur est avantageusement prévu sur le véhicule pour communiquer avec le capteur. Ledit dispositif interrogateur peut alors analyser le signal en associant le temps d'exposition à une température mesurée et en se référant à un modèle du pneumatique et transmettre les informations au conducteur. Le dispositif interrogateur peut encore être associé un dispositif enregistreur pour ensuite faire une analyse du cumul des températures et temps d'expositions correspondants.

Selon d'autres variantes de réalisation de l'invention, le capteur de mesure de température peut être associée à un ou plusieurs autres modules électroniques au sein du pneumatique, ces autres modules ayant la capacité de définir les temps d'exposition aux différentes températures et de mémoriser ces différentes informations. Une telle réalisation permet notamment une interrogation ultérieure de ces informations pour être analysées à partir d'un modèle du pneumatique considéré par exemple pour en déduire son éventuelle capacité à être rechapé.

Cette analyse du cumul des températures et temps d'expositions correspondants est notamment intéressante pour décider d'un éventuel rechapage comme expliqué précédemment.

Le modèle du pneumatique est défini à partir de tests ou simulations effectués au préalable ; ces tests ou simulations consistent par exemple à définir des valeurs de vieillissement subi par le pneumatique en fonction des températures mesurées et du temps d'exposition audites températures.

Des essais ont été réalisés sur plusieurs pneumatiques identiques de dimension 315/70R22.5 montés sur des machines de roulage.

Un capteur de type thermocouple a été inséré dans chacun des pneumatiques à l'extrémité axiale des couches de travail. Les mesures ont été effectuées durant une période de roulage correspondant à des distances variant de 10000 à 240000 kilomètres pour plusieurs pneumatiques en ligne droite.

Les conditions de roulage utilisées (variation de vitesse par exemple) ont provoqué des échauffements différents des pneumatiques.

A l'issu de ces premiers roulages, d'autres essais, toujours identiques pour tous les pneumatiques, ont été mis en oeuvre. Les pneumatiques ont alors été mis en dérive avec un angle de 5°. Ces derniers roulages, beaucoup plus sévères, permettent de mesurer les distances parcourues avant détérioration des pneumatiques et ainsi de classer les pneumatiques et de définir ceux qui auraient pu être rechapés à l'issu des premiers roulages.

Par ailleurs, à l'issu des premiers roulages, des analyses, conformes à l'invention et effectuées à partir des mesures de température et de temps d'exposition audites températures, ont été faites pour définir les pneumatiques susceptibles d'être rechapés.

L'analyse des mesures effectués conformément à l'invention à partir du cumul des mesures de températures et des temps d'expositions audites températures à l'aide du même modèle, préalablement défini, à conduit à des conclusions différentes quant à un éventuel rechapage desdits pneumatiques en fonction des distances parcourues et des variations de températures subies par les pneumatiques lors des premiers essais de roulage.

Les seconds essais de roulages qui consistaient en un roulage jusqu'à endommagement du pneumatique ont confirmé les analyses effectuées selon l'invention ; en effet, les conclusions sur la possibilité de rechaper certains des pneumatiques à l'issu des premiers roulages ont été confirmées par les distances parcourues par lesdits pneumatiques, lors des seconds essais, jugées satisfaisantes pour avoir pu faire l'objet d'un rechapage. De la même façon, les deuxièmes essais ont confirmé des choix de non rechapabilité de certains pneumatiques par des distances parcourues par lesdits pneumatiques jugées insuffisantes.

Ces essais qui ont été réalisés plusieurs fois en faisant varier les paramètres de roulage confirment que le procédé d'indication du vieillissement subi par un pneumatique conformément à l'invention peut permettre d'obtenir de bonnes indications quant à la possibilité d'effectuer un rechapage. Ce procédé selon l'invention est notamment très intéressant du fait de la rapidité d'analyse. Il reste toutefois une part subjective liée à la détermination d'un seuil de vieillissement subi qui fait appel au savoir faire de l'homme du métier du rechapage.

Par contre, la mise à disposition en continu au conducteur d'informations quant au vieillissement instantané subi par les pneumatiques qui se traduisent par des conseils quant à la conduite à adopter pour limiter ce vieillissement ne nécessite aucun savoir faire complémentaire.

Les résultas obtenus lors des essais ont également confirmés que le kilométrage parcouru par les pneumatiques n'a pas une incidence directe sur le vieillissement subi par ces pneumatiques.

## Revendications

1. Procédé d'indication du vieillissement subi par un pneumatique (1) en roulage sur un véhicule, **caractérisé en ce qu'**on mesure la température localement au moins en un point du pneumatique, **en ce qu'**on mesure le temps d'exposition à ladite température et **en ce que** ces mesures sont analysées avec un modèle dudit pneumatique (1).

2. Procédé d'indication du vieillissement subi par un pneumatique (1) en roulage selon la revendication 1, **caractérisé en ce que** le modèle est un système d'abaques et/ou un modèle numérique.

3. Procédé d'indication du vieillissement subi par un pneumatique (1) en roulage selon la revendication 1 ou 2, **caractérisé en ce que** la température est mesurée aux extrémités des nappes de travail (5) du pneumatique (1).

4. Procédé d'indication du vieillissement subi par un pneumatique (1) en roulage selon l'une des revendications 1 à 3, **caractérisé en ce que** les mesures sont enregistrées et **en ce que** l'analyse est effectuée sur le cumul des mesures.

5. Procédé d'indication du vieillissement subi par un pneumatique (1) en roulage selon l'une des revendications 1 à 4, **caractérisé en ce que** les mesures sont analysées instantanément et **en ce qu'**une information est transmise au conducteur du véhicule.

6. Procédé d'indication du vieillissement subi par un pneumatique (1) en roulage selon l'une des revendications précédentes, **caractérisé en ce qu'**au moins un capteur de température (6), associé à des moyens d'enregistrement et/ou de communication est inséré dans le pneumatique (1).

7. Utilisation d'au moins une mesure de température locale en un point d'un pneumatique (1) et de la mesure du temps d'exposition à ladite température pour déterminer une indication du vieillissement subi par ledit pneumatique (1) en roulage sur un véhicule par l'analyse de ces mesures avec un modèle du pneumatique (1).

8. Utilisation d'au moins une mesure de température et de la mesure du temps d'exposition à ladite température selon la revendication 7 pour déterminer l'aptitude d'un pneumatique (1) au rechapage.

9. Utilisation d'au moins une mesure de température et de la mesure du temps d'exposition à ladite température selon la revendication 7 pour apporter une information au conducteur du véhicule sur la conduite à adopter.

## Patentansprüche

1. Verfahren zum Anzeigen der von einem Reifen (1) beim Rollen an einem Fahrzeug erfahrenen Alterung, **dadurch gekennzeichnet, dass** man die Temperatur lokal an mindestens einer Stelle des Reifens misst, **dass** man die Expositionszeit bei dieser Temperatur misst und **dass** diese Messungen mit einem Modell des Reifens (1) analysiert werden.

2. Verfahren zum Anzeigen der von einem Reifen (1) beim Rollen erfahrenen Alterung nach Anspruch 1, **dadurch gekennzeichnet, dass** das Modell ein Diagrammsystem und/oder ein numerisches Modell ist.

3. Verfahren zum Anzeigen der von einem Reifen (1) beim Rollen erfahrenen Alterung nach Anspruch 1 oder 2, **dadurch gekennzeichnet, dass** die Temperatur an den Enden der Arbeitslagen (5) des Reifens (1) gemessen wird.

4. Verfahren zum Anzeigen der von einem Reifen (1) beim Rollen erfahrenen Alterung nach einem der Ansprüche 1 bis 3, **dadurch gekennzeichnet, dass** die Messungen aufgezeichnet werden und **dass** die Analyse an der Summe der Messungen durchgeführt wird.

5. Verfahren zum Anzeigen der von einem Reifen (1) beim Rollen erfahrenen Alterung nach einem der Ansprüche 1 bis 4, **dadurch gekennzeichnet, dass** die Messungen sofort analysiert werden und **dass** eine Information an den Fahrer des Fahrzeugs übermittelt wird.

6. Verfahren zum Anzeigen der von einem Reifen (1) beim Rollen erfahrenen Alterung nach einem der vorhergehenden Ansprüche, **dadurch gekennzeichnet, dass** mindestens ein Temperaturfühler (6), der Aufzeichnungs- und/oder Kommunikationseinrichtungen zugeordnet ist, in den Reifen (1) eingesetzt ist.

7. Verwendung mindestens einer lokalen Temperaturmessung an einer Stelle eines Reifens (1) und der Messung der Expositionszeit bei dieser Temperatur zum Bestimmen einer Anzeige der von dem Reifen (1) beim Rollen an einem Fahrzeug erfahrenen Alterung durch die Analyse dieser Messungen mit einem Modell des Reifens (1).

8. Verwendung mindestens einer Temperaturmessung und der Messung der Expositionszeit bei dieser Temperatur nach Anspruch 7 zum Bestimmen der Runderneuerungseignung des Reifens (1).

9. Verwendung mindestens einer Temperaturmessung und der Messung der Expositionszeit bei dieser Temperatur nach Anspruch 7, um dem Fahrer des Fahrzeugs eine Information über das anzunehmende Verhalten zu geben.

## Claims

1. Method of indicating the degree of ageing experienced by a tire (1) as it is being driven on by a vehicle, **characterized in that** the temperature is measured locally at at least one point of the tire, **in that** the time of exposure to the said temperature is measured and **in that** these measurements are analyzed using a model of the said tire (1).

2. Method of indicating the degree of ageing experienced by a tire (1) as it is being driven on according to Claim 1, **characterized in that** the model is a system of graphs and/or a numerical model.

3. Method of indicating the degree of ageing experienced by a tire (1) as it is being driven on according to Claim 1 or 2, **characterized in that** the temperature is measured at the ends of the working plies (5) of the tire (1).

4. Method of indicating the degree of ageing experienced by a tire (1) as it is being driven on according to one of Claims 1 to 3, **characterized in that** the measurements are recorded and **in that** it is the amassed set of measurements that is analyzed.

5. Method of indicating the degree of ageing experienced by a tire (1) as it is being driven on according to one of Claims 1 to 4, **characterized in that** the measurements are analyzed instantly and **in that** information is transmitted to the driver of the vehicle.

6. Method of indicating the degree of ageing experienced by a tire (1) as it is being driven on according to one of the preceding claims, **characterized in that** at least one temperature sensor (6), associated with recording and/or communication means, is inserted into the tire (1).

7. Use of at least one local temperature measurement at one point of a tire (1) and of the measurement of the time of exposure to the said temperature to determine an indication of the degree of ageing experienced by the said tire (1) as it is being driven on by a vehicle by analyzing these measurements using a model of the tire (1).

8. Use of at least one temperature measurement and of the measurement of the time of exposure to the said temperature according to Claim 7 to determine the suitability of a tire (1) for retreading.

9. Use of at least one temperature measurement and of the measurement of the time of exposure to the said temperature according to Claim 7 to provide the driver of the vehicle with information as to the driving style to be adopted.
